# EUROPEAN PATENT APPLICATION

(11) **EP 1 724 637 A1**
(43) Date of publication of application: **22.11.2006**
(21) Application number: 05719379.9
(22) Date of filing: 22.02.2005
(51) Int. Cl.: G03B 21/14

(54) **TWO-DIMENSIONAL IMAGE FORMING DEVICE**

(30) Priority: 27.02.2004 JP 2004054095
(71) Applicant: MATSUSHITA ELECTRIC INDUSTRIAL CO., LTD., Kadoma-shi, Osaka 571-8501 (JP)
(72) Inventor: SUGITA, Tomoya Matsushita Elec.Industrial Co.,Ltd., Chuo-ku, Osaka-shi, Osaka 540-6319 (JP); KASAZUMI, Ken'ichi Matsushita Elec. Ind. Co., Ltd., Chuo-ku, Osaka-shi, Osaka 540-6319 (JP)
(74) Representative: TBK-Patent
(86) International application number: PCT/JP2005/002804
(87) International publication number: WO 2005/083508

(57) **Abstract**

The present invention provides a two-dimensional image forming apparatus which also functions as an illumination apparatus at a low cost, and enlarges the utilization range f a two-dimensional image forming apparatus to a great extent. In a two-dimensional image forming apparatus (10) which includes a light source (1), two-dimensional image forming parts (5a) to (5c), and an enlarging and projection part (6), a rotation mechanism (11) for rotating the light source so that the light emission direction is changed is provided, and the light emitted from the light source is taken out as an illumination light by changing the light emission direction of the light source.

## Description

### TECHENICAL FIELD

The present invention relates to a two-dimensional image forming apparatus and, more particularly, to a two-dimensional image forming apparatus that enables, in addition to projecting a two-dimensional image, utilizing a light source emitted light in the use other than that.

### BACKGROUND ART

The two-dimensional image forming apparatus that is represented by a liquid crystal projector is advancing in its research and development, and commercialization due to its easiness in a large screen image display in such as a rear projection type or an enlarged projection type, and is providing a widely broadening use.

The main subjects in the conventional research and development for such two-dimensional image forming apparatuses are approaches in functional aspects such as miniaturization of the apparatus, increasing brightness and illumination, increasing contrast, and increasing resolution. As achievements of these research and development, for example, those which have high brightness such as several 1000 ANSI lumen and are quite compact are realized in enlarging and projection type liquid crystal projectors.

On the other hand, since the size of the screen is approximately fixed by the size of the screen in the rear projection type projection monitors, developments in the function aspects such as increasing brightness and increasing contrast as well as developments in the two-dimensional image displaying methods that enables diversification of uses of the apparatuses are carried out. Particularly, the techniques of switching displays of the two-dimensional image forming apparatuses are actively involved because those would diversify the uses of the apparatuses and can attend to various needs.

For example, in Patent reference No. 1, those which have plural screens and display images on arbitrary screens are proposed.

Further, in Patent reference No.2, those methods which enable switching of displays, i.e., switching between one image, plural images, high brightness images, and enlarged images is proposed.

Further, in Patent reference No.3, there is disclosed a projector apparatus which can select the image display position and the screen size by switching the optical path by the apparatus provided with a transparent type screen and a projection lens.
Patent reference No.1: Patent Publication Hei.:3-98037
Patent reference No.2: Patent Publication Hei.:4-70082
Patent reference No.3: Patent Publication Hei.:7-49533

### DISCLOSURE OF THE INVENTION

### PROBLEMS TO BE SOLVED BY THE INVENTION

However, since the above-described prior art techniques are all those which switch display forms for displaying the two-dimensional images, there was a problem that it was difficult to employ the light that is emitted from the light source in the uses other than the use in the two-dimensional image display.

Further, since the conventional proposal for the display switching method in the two-dimensional image forming apparatus supposes a use form in which two-dimensional image forming apparatus is used in a state where it is fixedly installed at a predetermined place, it was difficult to apply that proposal to such as a small-sized portable two-dimensional image forming apparatus.

The present invention is directed to solving the above-described problems and has for its object to provide a two-dimensional image forming apparatus which can utilize the light which is outputted from a light source for the use other than the two-dimensional image display, as well as can be miniaturized as a portable apparatus.

### MEANS FOR SOLVING THE PROBLEM

In order to solve the above-described problems, there is provided a two-dimensional image forming apparatus according to Claim 1 of the present invention, comprising: a light source, a two-dimensional image forming part for forming a two-dimensional image by the light emitted from the light source, an enlarging and projection part for enlarging and projecting the two-dimensional image formed by the two-dimensional image forming part, a light path switching part for switching and selecting a path for the light emitted from the light source among a first path including both the two-dimensional image forming part and the enlarging and projection part and a second light path which does not include at least one of the two-dimensional image forming part and the enlarging and projection part.

Thereby, a light source of a two-dimensional image forming apparatus can be employed for a use other than projection display of a two-dimensional image.

Further, according to Claim 2 of the present invention, there is provided a two-dimensional image forming apparatus as defined in Claim 1 wherein the second light path does not include the two-dimensional image forming part.

Thereby, it is possible to prevent the light source light which is used for a use other than projection display of a two-dimensional image from being attenuated by the two-dimensional image forming part.

Further, according to Claim 3 of the present invention, there is provided a two-dimensional image forming apparatus as defined in Claim 1 wherein the second light path does not include the enlarging and projection part.

Thereby, it is possible to prevent from the light source light which is used for a use other than projection display of a two-dimensional image from being attenuated by the two-dimensional image forming part.

Further, according to Claim 4 of the present invention, there is provided a two-dimensional image forming apparatus as defined in Claim 2 wherein the light path switching part is a rotation mechanism which makes rotate the light source so that the direction of the light emitted from the light source is changed.

Thereby, it is possible to realize a light path switching part in a simple construction, and it is possible to enlarge the utilization range of the two-dimensional image forming apparatus at a low cost.

Further, according to Claim 5 of the present invention, there is provided a two-dimensional image forming apparatus as defined in Claim 3 wherein the light switching part is a moving mechanism for moving the enlarging and projection part between a position which is located on a light path of the emitted light from the light source and a position which is not located on that light path.
the reflector is formed using a hologram recording material.

Thereby, it is possible to realize a light path switching part in a simple construction, and it is possible to enlarge the utilization range of the two-dimensional image forming apparatus at a low cost.

Further, according to Claim 6 of the present invention, there is provided a two-dimensional image forming apparatus as defined in Claim 1 wherein the light path switching part includes: a mirror, and a moving mechanism for moving the mirror between a position at which the mirror reflects the light emitted from the light source, which position is on a light path of the emitted light from the light source, and a position which is not located on the light path of the light emitted from the light source.

Thereby, it is possible to switch the light path of the light emitted from the light source without changing the optical axis of the optical system, and it is possible to prevent from deviation of an optical axis being generated accompanied by the switching of the optical path.

Further, according to Claim 7 of the present invention, there is provided a two-dimensional image forming apparatus as defined in Claim 1 wherein the second light path includes an enlarging optical system or a dispersion optical system, and the emitted light is irradiated toward the outside of the apparatus via the enlarging optical system or the dispersion optical system when the light path of the emitted light from the light source is switched so that the emitted light propagates on the second light path.

Thereby, it is possible to take out the light source light which is used for a use other than projection display of a two-dimensional image as a light of diversifying light bundle or a dispersion light that is safe as an illumination light.

Further, according to Claim 8 of the present invention, there is provided a two-dimensional image forming apparatus as defined in Claim 1 wherein the second light path includes the liquid crystal panel, and the emitted light is employed as a back light of the liquid crystal panel when the light path of the emitted light from the light source is switched so that the emitted light propagates on the second light path.

Thereby, it is possible to make the two-dimensional image forming apparatus have a function of displaying other images in addition to the function of displaying a two-dimensional image, thereby enlarging the utilization range of the two-dimensional image forming apparatus.

Further, according to Claim 9 of the present invention, there is provided a two-dimensional image forming apparatus comprising: a light source, a two-dimensional image forming part for forming a two-dimensional image by the light emitted from the light source, an enlarging and projection part for enlarging and projecting the two-dimensional image formed by the two-dimensional image forming part, a light path branching part for branching a path for the light emitted from the light source so that a part of the emitted light propagates on a first light path which includes both the two-dimensional image forming part and the enlarging and projection part, and the other part of the emitted light propagates on a second light path which does not include at least one of the two-dimensional image forming part and the enlarging and projection part.

Thereby, it is possible to utilize the light emitted from the light source for a projection display of a two-dimensional image as well as for a use other than that simultaneously.

Further, according to Claim 10 of the present invention, there is provided a two-dimensional image forming apparatus as defined in Claim 9 wherein the light path branching part is disposed between the light source and the two-dimensional image forming part.

Thereby, the light emitted from the light source can be employed for projection display of a two-dimensional image as well as for a use other than the projection display simultaneously, and thereby the utilization range of the two-dimensional image forming apparatus is increased to a great extent.

Further, according to Claim 11 of the present invention, there is provided a two-dimensional image forming apparatus as defined in Claim 9, wherein the light path branching part is disposed between the two-dimensional image forming part and the enlarging and projection part.

Thereby, the light emitted from the light source can be employed simultaneously for a projection display of a two-dimensional image as well as for an irradiation of illumination light for presentment effect.

Further, according to Claim 12 of the present invention, there is provided a two-dimensional image forming apparatus as defined in Claim 10 or 11, wherein the light path branching part is a half mirror.

Thereby, it is possible to realize employing the light emitted from a light source simultaneously for a projection display of a two-dimensional image as well as for a use other than that, with dividing the light quantity in an arbitrary ratio, thereby enlarging the utilization range of the two-dimensional image forming apparatus to a great extent.

Further, according to Claim 13 of the present invention, there is provided a two-dimensional image forming apparatus as defined in Claim 1 or 9 wherein the laser source is an LED.

Thereby, it is possible to further miniaturize the two-dimensional image forming apparatus as well as to reduce the power consumption.

Further, according to Claim 14 of the present invention, there is provided a two-dimensional image forming apparatus as defined in Claim 1 or 9, wherein the light source is a laser.

Thereby, it is possible to further miniaturize the two-dimensional image forming apparatus as well as to reduce the power consumption, and further, it is possible to provide an extremely high color reproducibility.

### EFFECTS OF THE INVENTION

The two-dimensional image forming apparatus of the present invention provides an effect that by being provided with quite compact and simple optical path switching part, the light emitted from the light source can be utilized for displaying a two-dimensional image as well as an illumination light source.

The two-dimensional image forming apparatus of the present invention provides an effect that the illumination light can be utilized as a back light of a liquid crystal panel by that a liquid crystal panel is integrated with the two-dimensional image forming apparatus.

Particularly, by using an LED or a laser as a light source, a compact two-dimensional image forming apparatus is accomplished and thereby a two-dimensional image forming apparatus having a high portability and a high brightness illumination function can be realized. Further, when an LED or a laser is used as a light source, the utilization range as an illumination is enlarged to a great extent with relative to a case where a halogen lamp is employed since a color range that is displayable is enlarged, and further adjustment and selection to an arbitrary color tone is made possible.

Further, the two-dimensional image forming apparatus of the present invention provides an effect that it is possible to employ the light emitted from the light source for displaying a two-dimensional image and as an illumination light simultaneously, when a light path branching part for branching a light path such as a half mirror is provided, in place of the light path switching part.

### BRIEF DESCRIPTION OF THE DRAWINGS

Figure 1a and 1b are diagrams illustrating a structure of a two-dimensional image forming apparatus, according to a first embodiment of the present invention, where figure 1a shows an example of light irradiation before the emission direction of the light source is switched by the rotation mechanism and figure 1b shows an example of light irradiation when the emission direction of the light source is switched.
Figure 2a and 2b are diagrams illustrating a structure of a two-dimensional image forming apparatus, according to a second embodiment of the present invention, where figure 2a shows an example of light irradiation before the emission direction of the light source is switched by the movable mirror and figure 2b shows an example of light irradiation when the emission direction of the light source is switched.
Figure 3 is a diagram illustrating a two-dimensional image forming apparatus which is provided with a dispersion optical system, according to a third embodiment of the present invention.
Figure 4 is a diagram showing a construction of a two-dimensional image forming apparatus in which the movable mirror and the dispersion plate are integrated with together, according to the third embodiment of the present invention.
Figure 5 is a diagram illustrating a structure of a two-dimensional image forming apparatus which is provided with an image display part, according to a fourth embodiment of the present invention.
Figure 6 is a diagram specifically illustrating a structure of a two-dimensional image forming apparatus which employs a laser as a light source, according to a fifth embodiment of the present invention.
Figure 7 is a diagram illustrating another structure of a two-dimensional image forming apparatus, according to the fifth embodiment of the present invention.
Figure 8 is a diagram illustrating a structure of a two-dimensional image forming apparatus which is provided with a light path branching part, according to a sixth embodiment of the present invention.
Figure 9 is a diagram illustrating a structure of a two-dimensional image forming apparatus, according to a seventh embodiment of the present invention.

### DESCRIPTION OF NUMERALS

- 1: light source
- 2: light integrating optical system
- 3a, 3b, 3c, 63a, 63b, 63c: dichroic mirrors
- 4a, 4b: mirrors
- 5, 5a, 5b, 5c,: two-dimensional image forming parts
- 6: dichroic mirror
- 7, 97: enlarging and projecting part
- 10, 20, 30, 40, 50, 60, 70, 80, 90: two-dimensional image forming apparatus
- 11: rotation mechanism
- 11a, 23a: setting plate
- 11b, 23b: lever
- 11c, 23c: link mechanism
- 22, 42: movable mirror
- 31: dispersion plate
- 51: liquid crystal panel
- 61a, 61b, 61c: laser
- 71: polygon mirror
- 72: galvano mirror
- 82: half mirror

### BEST MODE FOR CARRYING OUT THE INVENTION

Embodiments of the present invention will be described with reference to the drawings.

### (Embodiment 1)

The present invention proposes a structure of a two-dimensional image forming apparatus which originally has a function of displaying a two-dimensional image, and to which a new function other than image display is added by a simple method by utilizing the characteristics which is inherently possessed by the apparatus, and its practicability is demonstrated.

In the first embodiment of the present invention, it will be described on an apparatus in which a light path switching part for switching the emission direction of the light emitted from the light source is provided in the two-dimensional image forming apparatus, and thereby the light from the light source is utilized as an illumination light in addition to displaying a two-dimensional image.

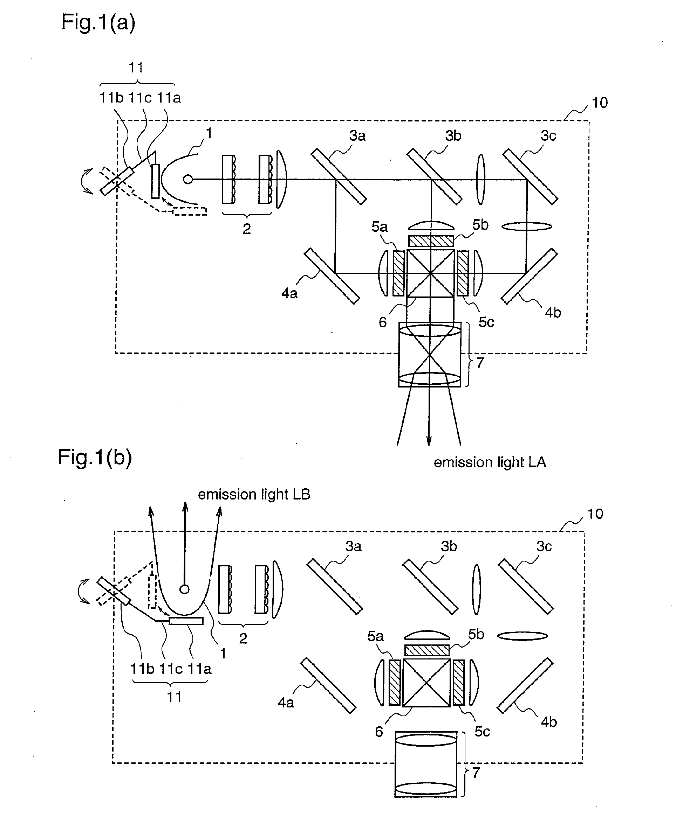

Figure 1 are diagrams illustrating a structure of a two-dimensional image forming apparatus, according to a first embodiment of the present invention, where figure 1a shows a state where the light emitted from the light source is used for displaying a two-dimensional image, and figure 1b shows a state where the emitted light from the light source is used as an illumination light.

In figure 1, reference numeral 10 denotes a two-dimensional image forming apparatus of this first embodiment. Numeral 1 denotes a light source comprising a halogen lamp, numeral 2 denotes a light integrating optical system, numerals 3a, 3b, and 3c denote dichroic mirrors which respectively have functions of reflecting only the lights of wavelength regions of red, green, and blue, respectively. Numerals 4a, 4b denote mirrors, numerals 5a, 5b, and 5c denote two-dimensional image forming parts each comprising a two-dimensional spatial light modulating device. Numeral 6 denotes a dichroic prism which mixes the lights which are modulated by the two-dimensional image forming parts 5a to 5c, respectively. Numeral 7 denotes an enlarging and projection part which is constituted by pair lenses. Numeral 11 denotes a rotation mechanism which changes the direction of the light emission of the light source 1. Numeral 11a denotes a setting plate for setting the light source 1. Numeral 11b denotes a lever which is provided on the side surface of the apparatus 10. Numeral 11c denotes a link mechanism which links the setting plate and the lever.

The above-described rotation mechanism 11 for rotating the light source comprises the setting plate 11a, the lever 11b, and the link mechanism 11c. By setting the light source 1 on the setting plate 11a, making the setting plate 11a rotating to move from the position shown in figure 1 (a) to the position in shown in figure 1(b), or from the position shown in figure 1 (b) to the position shown in figure 1 (a), by a dynamical method from the outside of the apparatus such as operating the lever 11b by the user, the light emission direction from the light source 1 can be easily switched. Besides, the rotation mechanism 11 for rotating the light source is not limited to that described above, but it is possible to install such as a motor inside the setting plate 11a, and to make the setting plate 11a rotate by an electric input so as to switch the light emission direction from the light source 1.

Hereinafter, the function and effect of the two-dimensional image forming apparatus in the present construction will be described.

First of all, the function of enlarging and displaying a two-dimensional image which is possessed by the two-dimensional image forming apparatus 10 is described. In figure 1(a), the lights emitted from the light source 1 are approximately parallel lights, and those are subjected to uniformization of the in-plain light intensity distribution by the light integrating optical system 2. Here, the distances between the light integrator optical system 2 and the respective two-dimensional image forming parts 5a to 5c are optimized so that the in-plane light intensity distribution on the respective plains of the two-dimensional image forming parts 5a to 5c are approximately uniform.

Further, inside the light paths between the light integrator optical system 2 and the respective two-dimensional image forming parts 5a to 5c, dichroic mirrors 3a, 3b, and 3c for filtering the white light which is emitted from the light source 1 to output the lights of respective wavelengths of R, G, and B are disposed. For example, by the dichroic mirror 3a which is disposed at a position closest to the light source 1, only the light of red region is reflected while the light of the other wavelength is transmitted. Then, the light of red region that is reflected by the dichroic mirror 3a is irradiated to the two-dimensional image forming part 5a via the mirror 4a. Among the light that has transmitted through the dichroic mirror 3a, only the light of green region is reflected by the dichroic mirror 3b which is secondly closer to the light source 1, and the light of the other wavelength is transmitted. Then, the light of green region that is reflected by the dichroic mirror 3b is irradiated to the two-dimensional image forming part 5b. Further, among the light that has transmitted the dichroic mirror 3b, only the light of green wavelength is reflected by the dichroic mirror 3c, and the reflected light of the blue region is irradiated to the two-dimensional image forming part 5b. Then, the lights which have respectively passed through the two-dimensional image forming parts 5a to 5c, respectively, are again mixed by the dichroic prism 6, to be emitted to the outside of the apparatus as an emitted light LA by the enlarging and projecting part 7 which projects the two-dimensional images which are respectively formed by the two-dimensional image forming parts 5a to 5c in an one-to-one manner, and is enlarged and displayed on a screen outside the apparatus (not shown).

Next, the illumination function which is possessed by the two-dimensional image forming apparatus 10 will be described.

In figure 1 (b), the direction of the light emitted from the light source 1 is switched by the rotation mechanism 11, and the output light LB is outputted from the apparatus 10. This output light LB is a light that is directly emitted from the light source 1 comprising a halogen lamp, and for example, this is a high output white light of several 100W class.

By switching the direction of the light emitted from the light source 1 in this way, the two-dimensional image forming apparatus 10 exhibits a function as an illumination apparatus which is different from the function of enlarging and displaying a two-dimensional image.

Generally, the light source which is used in a two-dimensional image forming apparatus is a high output white light source, and therefore, it can be easily utilized as an illumination source, and its availability is also high. As a result, it is possible to utilize this two-dimensional image forming apparatus 10 as a main illumination or an indirect illumination. Further, since the use method of a two-dimensional image forming apparatus of a projection type that is quite general, is a way in which a large screen image is viewed with pleasure, with the illumination inside a room being reduced as represented by a home theater, it is unlikely to use the two-dimensional image forming apparatus 10 of a projection type as a two-dimensional image enlarging and projecting display apparatus as shown in figure 1 (a) as well as utilize the same apparatus as an illumination apparatus as shown in figure 1 (b) . From this fact, it can be said that the two-dimensional image forming apparatus 10 having an illumination function in addition to the function of enlarging and displaying a two-dimensional image has an effective additional function and that the two-dimensional image forming apparatus 10 has a large advantage for the user.

As described above, according to the first embodiment, since the two-dimensional image forming apparatus 10 is provided with a rotation mechanism 11 for rotating the light source 1 so that the direction of the light emitted from the light source 1 is changed, it is possible to take out the emitted light from the light source of the two-dimensional image forming apparatus as an illumination light source. Thereby, it is possible to make the two-dimensional image forming apparatus serving also as an illumination apparatus at a low cost, and thereby to increase the utilization range of the two-dimensional image forming apparatus to a great extent.

In the above-described embodiment, a case where the light path switching part comprises a rotation mechanism 11 which rotates the light source 1 so that the light emission direction from the light source is switched is described, the light path switching part is not restricted thereto. For example, one in which the light source 1 is moved so that the direction of the emitted light is changed may be employed with the same effects being accomplished.

Further, as the light path switching part, one which reflects the emitted light from the light source so that the light emission direction is changed, may be employed in place of that which rotates or moves the light source itself.

### (Embodiment 2)

Hereinafter, in this second embodiment of the present invention, a two-dimensional image forming apparatus in which the light path switching part is constituted by a movable mirror which is provided movable between a position at which it reflects the light emitted from the light source and a position at which it would not reflect the emitted light and a moving mechanism for moving the movable mirror will be described.

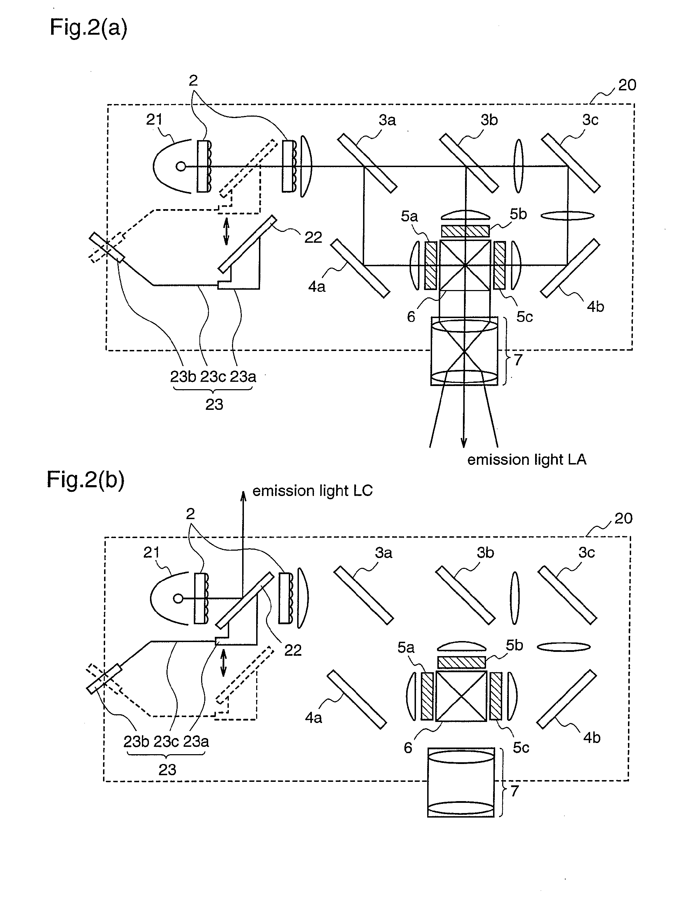

Figure 2 is a diagram illustrating a structure of a two-dimensional image forming apparatus according to a second embodiment of the present invention, where figure 2a shows a state where the light emitted from the light source is used for the two-dimensional image display and figure 2b shows a state where the light emitted from the light source is used as an illumination light.

In figure 2, reference numeral 20 denotes a two-dimensional image forming apparatus of this second embodiment. Numeral 21 denotes a light source comprising a halogen lamp, numeral 2 denotes a light integrator optical system, numerals 3a, 3b, and 3c denote dichroic mirrors which respectively have functions of reflecting only the lights of wavelength regions of red, green, and blue, respectively, numerals 4a, 4b denote mirrors, numerals 5a, 5b, and 5c denote two-dimensional image forming parts each comprising a two-dimensional spatial light modulation device, numerals 6 denotes a dichroic prism which mixes the lights which are modulated by the two-dimensional image forming parts 5a to 5c, respectively. Numeral 7 denotes an enlarging and projection part which is constituted by pair lenses. Numeral 22 denotes a movable mirror. Numeral 23 denotes a moving mechanism which moves the movable mirror in response to the user operation.

As described above, in this second embodiment, a light path switching part for switching the light emission direction is constituted by the movable mirror 22 and the moving mechanism 23, and by that the movable mirror 22 is moved between the position on the light path (which are shown in figure 2b) connecting the light source 21 and the two-dimensional image forming parts 5a to 5c and the position outside on that light path (which are shown in figure 2a) by the moving mechanism, it is possible to switch the direction of the light emitted from the light source 21.

The moving mechanism 23 for moving the movable mirror 22 comprises, for example, as shown in figure 2, the setting plate 23a, the operating lever 23b, and the link mechanism 23c connecting these. By setting the movable mirror 22 on the setting plate 23a, and moving the setting plate from the position shown in figure 2(a) to the position shown in figure 2 (b), or from the position shown in figure 2 (b) to the position shown in figure 2 (a), by a dynamical method that is exerted from the outside of the apparatus 20 such as comprising the user's operation of the lever 23b, the light emission direction from the light source 1 can be easily switched. Besides, the rotation mechanism 23 for moving the movable mirror 22 is not limited to that described above, but it is possible to install such as a motor inside the setting plate 23a, and to make the setting plate 23a move by a motive force such as by a motor so as to switch the light emission direction from the light source 1.

Hereinafter, the function and effect of the two-dimensional image forming apparatus 20 of the above construction will be described.

First of all, the function of enlarging and displaying a two-dimensional image which is possessed by the two-dimensional image forming apparatus 20 is described.

Similarly as in the above-described first embodiment, in figure 2a, in a case where the movable mirror 22 is disposed at a position which is not located on the light path connecting the light source 21 and the two-dimensional image forming parts 5a to 5c (a position shown in figure 2a), the light emitted from the light source is subjected to the uniformization of the in-plain light intensity distribution by the light integrating optical system 2. Here, the distance between the light integrating optical system 2 and the respective two-dimensional image forming parts 5a to 5c are optimized so that the in-plain light intensity distribution on the respective plains of the two-dimensional image forming parts 5a to 5c are approximately uniform.

In addition, on the light path between the light integrating optical system 2 and the two-dimensional image forming parts 5a to 5c, there are disposed dichroic mirrors 3a, 3b, 3c for filtering the white light which is emitted from the light source 21 to output the lights of wavelength regions of R, G, B, respectively. For example, by the dichroic mirror 3a which is disposed at a position closest to the light source 21, only the light of red region is reflected, and the light of other wavelength region is transmitted. Then, the light of red region reflected by the dichroic mirror 3a is irradiated to the two-dimensional image forming part 5a via the mirror 4a. The light that has transmitted through the dichroic mirror 3a has only its light of green region being reflected by the dichroic mirror 3b which is located secondly close to the light source 21, and the light of the other wavelength region is transmitted. Then, the light of green region reflected by the dichroic mirror 3b is irradiated to the two-dimensional image forming part 5b. The light that has transmitted through the dichroic mirror 3b has only its light of blue region being reflected by the dichroic mirror 3c, and the light of blue region that is reflected is irradiated to the two-dimensional image forming part 5c via the mirror 4b. Thereafter, the respective lights that have transmitted through the respective two-dimensional image forming parts 5a, 5b, 5c are mixed by the dichroic prism 6, and the result is outputted to the outside of the apparatus 20 as an emitted light LA from the enlarging and projecting part 7 which projects the two-dimensional images that are produced by the two-dimensional image forming parts 5a to5c in an one-to-one manner, and is enlarged and displayed on a screen outside the apparatus (not shown).

Next, the illumination function which is possessed by this two-dimensional image forming apparatus 20 is described.

In figure 2b, in a case where the movable mirror 22 is disposed at a position which is located on the light path connecting the light source 21 and the two-dimensional image forming parts 5a to 5c (a position shown in figure 2b) by the moving mechanism, the light emitted from the light source is reflected by the movable mirror 22 and is irradiated to the outside of the apparatus 20 as the emission light LC. In this second embodiment, since the movable mirror 22 is disposed between the two sets of lens arrays which constitute the light integrating optical system 2, the emission light LC does not become parallel lights, but the light emitted from the halogen lamp as a light source 21 become white light which is obtained by that the transmitted lights that have transmitted through a piece of optical part (fly lens array) 1 constituting the light integrating optical system 2, i.e., the two-dimensional beam sequence that are produced by the respective lenses which constitute the piece of fly lens array are mixed together. Thus, by that the light emission direction from the light source 21 is switched by the optical path switching part 22, the two-dimensional image forming apparatus 20 can exhibit the illumination function that is different from the function of enlarging and displaying two-dimensional image.

As described above, according to the second embodiment, since in the two-dimensional image forming apparatus 20, there are provided a movable mirror that is movable between a position on a light path of the light integrating optical system 2 and a position located other than on the light path, and a moving mechanism for moving the movable mirror, and it is constituted such that the light path of the light emitted from the light source is switched between the light path passing through the light path for forming the two-dimensional image and the light path which does not pass through the optical system, it is possible to take out the light emitted from the light source of the two-dimensional image forming apparatus as an illumination light. Thereby, it is possible to make the two-dimensional image forming apparatus also function as an illumination apparatus at a low cost, thereby increasing the utilization range of the two-dimensional image forming apparatus 20 to a great extent.

In addition, since in the above second embodiment, the light path of the light emitted from the light source of the two-dimensional image forming apparatus is switched by disposing a movable mirror on a light path of an optical system for forming a two-dimensional image or removing the same, it is not necessary to move the constitutional parts of the optical system for forming a two-dimensional image. Therefore, the possibility that the optical axes of the constitutional parts constituting the two-dimensional image forming apparatus 20 are deviated is reduced, thereby suppressing the deterioration in the display quality of the images due to the deviations in the optical axes.

Besides, while in the second embodiments, the movable mirror 22 is inserted between the two optical parts (fly lens arrays) constituting the light integrating optical system 2, the insertion position of the movable mirror 2 is not limited thereto, but it may be inserted, for example, between the light source 21 and the light integrating optical system 2, or between the light integrating optical system 2 and the dichroic mirror 3a.

However, it is fundamentally required to make the distance from the light integrating optical system to the special light modulator as short as possible in view of the compactness of the projector apparatus. When considering this fact, it is not preferred to insert the movable mirror 22 at position behind the light integrating optical system 2. Accordingly, it is preferable that the movable mirror 22 is inserted before the light integrating optical system 2, i.e., between the two sets of lens arrays constituting the light integrating optical system 2, or between the light source 21 and the light integrating optical system 2 as shown in figure 2.

Further, if there exists a large distance between the light source 21 and the light integrating optical system 2, it is required to increase the area of the light integrating optical system 2 or to insert a light collecting lens between the light integrating optical system 2 and the movable mirror 22 in order to make the emitted light from the light source 21 efficiently incident to the light integrating optical system 2, which may result in an increase in the apparatus size and an increase in the cost. When this point is also considered, it is preferred that the movable mirror 22 is inserted between the two sets of lens arrays constituting the light integrating optical system 2, which favorably results in an effect that the apparatus 20 can be constituted in compact.

### (Embodiment 3)

Generally, the light source of the above-descried two-dimensional image forming apparatus is preferred to be of a high brightness, and therefore, a structure in which a filament as a light emission part is covered by a transparent glass material in such as a halogen lamp. Accordingly, when a light source having such a structure is employed as a light source, there may arise a possibility that the user directly views the light source, resulting in a problem in safety. Particularly, as a main illumination or an indirect illumination which is used in home, a scattered light which irradiate a wide range as a fluorescent light is desired. Therefore, in this third embodiment, a structure which makes the two-dimensional image forming apparatus widely usable as an illumination apparatus which has no problems in view of safety is proposed.

In this third embodiment, a case where a dispersion optical system is provided with the two-dimensional image forming apparatus 30 in order to make the two-dimensional image forming apparatus widely usable as an illumination apparatus is described.

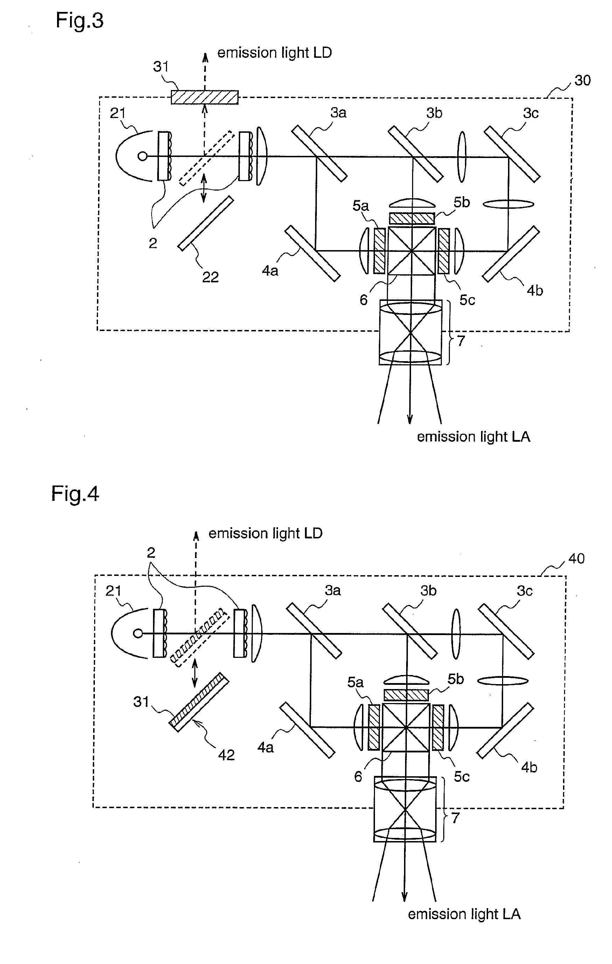

Figure 3 is a diagram illustrating an example of a construction of a two-dimensional image forming apparatus according the third embodiment of the present invention.

In figure 3, reference numeral 30 denotes a two-dimensional image forming apparatus of this third embodiment. Numeral 21 denotes a light source comprising a halogen lamp, numerals 3a, 3b, and 3c denote dichroic mirrors which respectively have functions of reflecting only the lights of wavelength regions of red, green, and blue, respectively. Numerals 4a, 4b denote mirrors, numerals 5a, 5b, and 5c denote two-dimensional image forming parts each comprising a two-dimensional spatial light modulating device. Numeral 6 denotes a dichroic prism which mixes the lights which are modulated by the two-dimensional image forming parts 5a to 5c, respectively. Numeral 7 denotes an enlarging and projection part which is constituted by pair lenses. Numeral 22 denotes a movable mirror, numeral 31 denotes a dispersion plate which functions as a dispersion optical system. Here, the dispersion plate 31 can be easily manufactured by, for example, forming concavo-convex at random on the surface of the glass plate.

In this third embodiment, similarly as in the second embodiment, a light path switching part for switching the light emission direction is constituted by the movable mirror 22 and its moving mechanism, and the movable mirror 22 is moved between the position on the light path connecting the light source 21 and the two-dimensional image forming apparatus 5a to 5c (the position shown by dotted lines in figure 3) and the position other than on the light path (the position shown by real lines in figure 3) by the moving mechanism, thereby the direction of the light emitted from the light source 21 of the two-dimensional image forming apparatus 30 can be switched. Then, the movement by the moving mechanism for moving the movable mirror 22 can be easily accomplished by such as setting the movable mirror 22 on such as a setting plate and moving the setting plate from the position shown by real lines in figure 3 to the position shown by dotted lines in figure 3, or from the position shown by dotted lines to the position shown by the real lines, by a dynamical method that is exerted from the outside of the apparatus 30, such as comprising the user's operation of a lever that is provided at the side surface of the apparatus 30. Besides, the moving mechanism for moving the movable mirror can be realized by installing such as a motor inside the setting plate 23a, and making the setting plate move by an electric input.

Hereinafter, the function and effect of the two-dimensional image forming apparatus 30 of the above construction will be described.

First of all, the function of enlarging and displaying a two-dimensional image which is possessed by the two-dimensional image forming apparatus 30 is described.

Similarly as in the above-described embodiments, when the movable mirror 22 is disposed at a position which is not on the light path connecting the light source 21 and the two-dimensional image forming parts 5a to 5c (disposed at a position shown by real lines in figure 3) as shown in figure 3, the light emitted from the light source 21 has its in-plain light intensity distribution being made uniform by the light integrating optical system 2. Here, the distances between the light integrating optical system 2 and the respective two-dimensional image forming parts 5a to 5c are optimized so that the in-plain light intensity distribution are approximately uniform on the respective plains of the two-dimensional image forming parts 5a to 5c.

In addition, on the light paths between the light integrating optical system 2 and the respective two-dimensional image forming parts 5a to 5c, there are disposed dichroic mirrors 3a, 3b, and 3c for filtering the white light which is emitted from the light source 21 to output the lights of wavelength regions of R, G, and B, respectively. For example, by the dichroic mirror 3a which is disposed at a position closest to the light source 21, only the light of red region is reflected while the light of the other wavelength is transmitted. Then, the light of red region that is reflected by the dychroic mirror 3a is irradiated to the two-dimensional image forming part 5a via the mirror 4a. The light that has transmitted through the dichroic mirror 3a has only its light of green region being reflected by the dichroic mirror 3b which is secondly closer to the light source 21, and the light of other wavelength region is transmitted. Then, the light of green region reflected by the dichroic mirror 3b is irradiated to the two-dimensional image forming part 5b. Further, the light that has transmitted through the dichroic mirror 3b has only its light of blue region being reflected by the dichroic mirror 3c, and the reflected light of blue region is irradiated to the two-dimensional image forming part 5c via the mirror 4b. Then, the lights which have respectively passed through the two-dimensional image forming parts 5a to 5c, respectively, are again mixed by the dichroic prism 6, and the resulted wave are emitted to the outside of the apparatus as an emitted light LA by the enlarging and projecting part 7, and is enlarged and displayed on a screen outside the apparatus (not shown).

Next, the illumination function which is possessed by the two-dimensional image forming apparatus 30 will be described.

When the movable mirror 22 is disposed on the light path connecting the light source 21 and the two-dimensional image forming parts 5a to 5c by the moving mechanism (disposed at the position represented by doted lines in figure 3), the light emitted from the light source 21 is reflected by the removable mirror 22, and the reflected result light passes through the dispersion plate 31 to be irradiated to the outside as the emission light LD. Therefore, in this two-dimensional image forming apparatus, the emitted light LD becomes a scattered *light,* and the unfavorable influences on the eyesight that may arise in handling a high output light source can be reduced to a great extent, as a prominent advantage in view of safety. Further, the dispersion plate 31 can be designed or fabricated to have an arbitrary dispersion angle (to have an arbitrary degree of dispersion), and therefore, it is possible to adjust the state of illumination (for example, a broadening angle) according to its use.

As described above, according to the third embodiment, since in the two-dimensional image forming apparatus 30, there are provided a light path switching part 22 for switching the light path of the emitted light from the light source 1, and a dispersion plate 31 for dispersing the light of the light source to the outside of the apparatus 30, the emission light from the light source of the apparatus 30 may be a dispersion light, thereby the light source light of the two-dimensional image forming apparatus can be utilized as an illumination light which irradiates a wide range, without arising any problems in view of safety. Therefore, it is possible to obtain a two-dimensional image forming apparatus which can emit illumination light that can be utilized for a variety of uses.

Further, in this third embodiment, the movable mirror 22 is disposed at a position between the two sets of lens arrays constituting the light integrating optical system 2, and therefore, the apparatus 30 can be made compact.

Besides, in the third embodiment, the two-dimensional image forming apparatus is constituted to include a dispersion optical system comprising a dispersion plate, which disperses the light emitted from the light source which outputs light as an illumination light, the two-dimensional image forming apparatus may include an enlarging optical system which converts the light emitted from the light source that is outputted as an illumination light to the outside to a diversifying bundle light, in place of the dispersion optical system described above.

Besides, while in the third embodiment the dispersion plate 31 is provided at the side surface of the apparatus 30, the dispersion plate 31 is not limited to that in the third embodiment. For example, the dispersion plate 31 may be integrated with the movable mirror 42, like the two-dimensional image forming apparatus 40 shown in figure 4, with the same effects obtained.

### (Embodiment 4)

While in each of the above-described respective embodiments, a new function which was added to the two-dimensional image forming apparatus was an illumination function, a new function which is to be added is not limited to the illumination function.

In this fourth embodiment, another embodiment in which an image display part such as a liquid crystal panel is disposed at an outer contour surface of the apparatus and the apparatus can select the function of performing enlarging and projecting display of a two-dimensional image on a screen provided outside the apparatus, and the function of performing an image display by an image display part provided in the apparatus will be described.

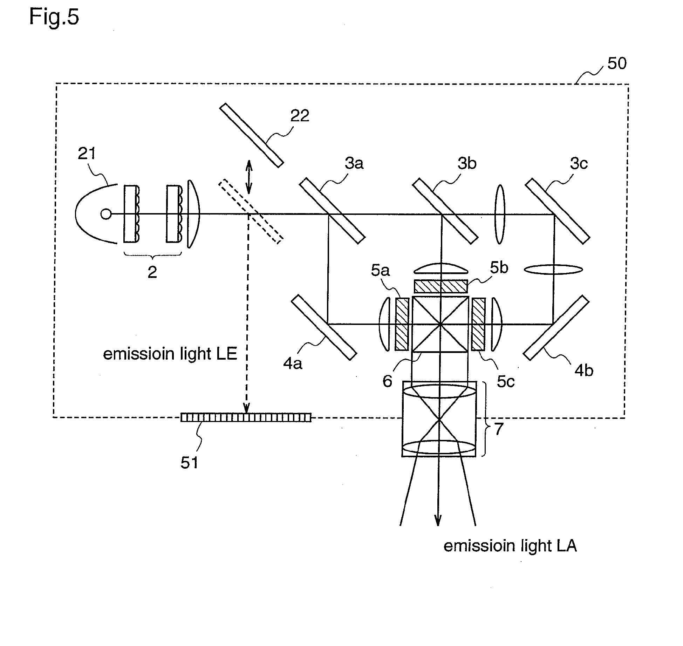

Figure 5 is a diagram illustrating an example of a construction of a two-dimensional image forming apparatus according to the fourth embodiment of the present invention.

In figure 5, numeral 50 denotes a two-dimensional image forming apparatus according to the fourth embodiment of the present invention. Numeral 21 denotes a light source comprising a halogen lamp, numeral 2 denotes a light integrator optical system, numerals 3a, 3b, and 3c denote dichroic mirrors which respectively have functions of reflecting only the light of wavelength region of red, green, and blue, respectively, numerals 4a, 4b denote mirrors, numerals 5a, 5b, and 5c denote two-dimensional image forming parts each comprising a two-dimensional spatial light modulating device, numeral 6 denotes a dichroic prism which mixes the lights which are modulated by the two-dimensional image forming parts 5a to 5c, respectively. Numeral 7 denotes an enlarging and projection part which is constituted by pair lenses. Numeral 22 denotes a movable mirror. Numeral 51 denotes a liquid crystal panel having a function of displaying an image.

In this fourth embodiment, a light path switching part for switching the light emission direction of the light emitted from the light source 21 is constituted by the movable mirror 22 and the moving mechanism 23 for moving the movable mirror 22. By moving the movable mirror 22 so as to be located at either of the position on the light path connecting the light source 21 and the two-dimensional image forming parts 5a to 5c (which are shown by dotted lines in figure 5) and the position not on that light path (which are shown by real lines in figure 5), it is possible to switch the direction of the light emitted from the light source 21 in the apparatus 50. Here, though the moving mechanism is not illustrated here, this is the same as the moving mechanism 23 in the second embodiment.

The movable mirror 22 is, differently from as in the second and third embodiment, disposed so as to be inserted between the light integrating optical system 2 and the dichroic mirror 3a which is disposed at a position that is closest to the light source 21. Further, in this construction, the optical length from the light source 21 to the two-dimensional image forming part 5a when the movable mirror 22 is retired from the position on the light path as shown by real lines in figure 5 is made equal to the optical path length from the light source 21 to the liquid crystal panel 51 when the movable mirror 22 is inserted on the light path as shown by dotted lines in figure 5.

Hereinafter, the function and effect of the two-dimensional image forming apparatus 50 of the above construction will be described.

First of all, the function of enlarging and displaying a two-dimensional image which is possessed by the two-dimensional image forming apparatus 50 is described.

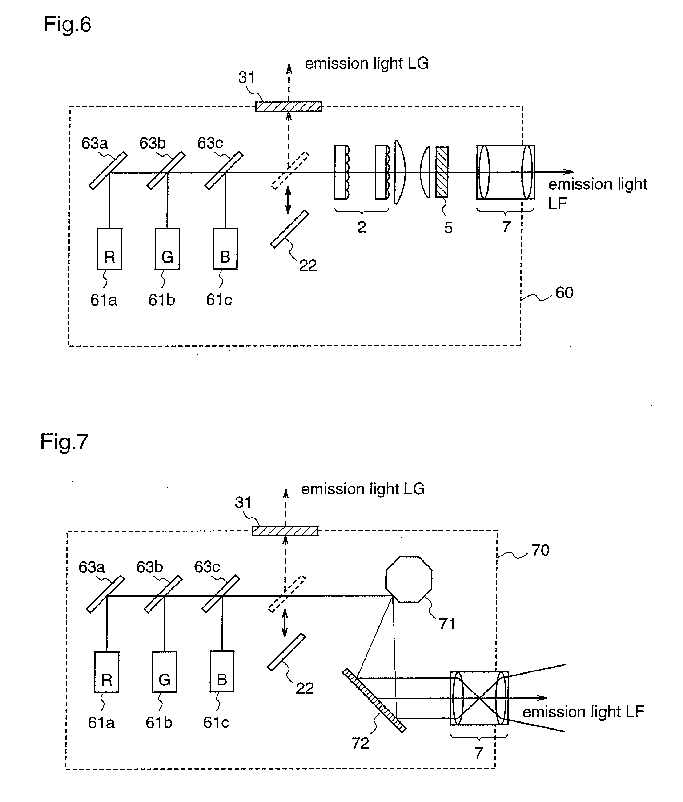

In a case where the movable mirror 22 is disposed at a position that is not located on the light path connecting the light source 21 and the two-dimensional image forming parts 5a to 5c (disposed at a position which is shown by real lines in figure 6), the light emitted from the light source 21 is subjected to the uniformization of the in-plain light intensity distribution by the light integrating optical system 2. Here, the distances between the light integrating optical system 2 and the respective two-dimensional image forming parts 5a to 5c are optimized so that the in-plain light intensity distribution thereof are approximately uniform on the respective plains of the two-dimensional image forming parts 5a to 5c.

In addition, on the light paths between the light integrating optical system 2 and the respective two-dimensional image forming parts 5a to 5c, there are disposed dichroic mirrors 3a, 3b, 3c for filtering the white light which is emitted from the light source 21 to output the lights of wavelength regions of R, G, B, respectively. For example, by the dichroic mirror 3a which is disposed at a position closest to the light source, only the light of red region is reflected, and the light of other wavelength region is transmitted. Then, the light of red region reflected by the dichroic mirror 3a is irradiated to the two-dimensional image forming part 5a via the mirror 4a. The light that has transmitted through the dichroic mirror 3a has only its light of green region being reflected by the dichroic mirror 3b which is located secondly close to the light source 21, and the light of other wavelength region is transmitted. Then, the light of green region reflected by the dichroic mirror 3b is irradiated to the two-dimensional image forming part 5b. Further, the light that has transmitted through the dichroic mirror 3b has only its light of blue region being reflected by the dichroic mirror 3c, and the reflected light of blue region that is irradiated to the two-dimensional image forming part 5c via the mirror 4b. Thereafter, the respective lights that have transmitted through the respective two-dimensional image forming parts 5a, 5b, 5c are mixed by the dichroic prism 6, and the result is outputted to the outside of the apparatus 50 as an emitted light LE by the enlarging and projecting part 7, and is enlarged and displayed on a screen outside the apparatus (not shown).

Next, the image displaying function which is possessed by the two-dimensional image forming apparatus 50 will be described.

When the movable mirror 22 is disposed on the light paths connecting the light source 21 and the two-dimensional image forming parts 5a to 5c by the above-described moving mechanism (disposed at the position represented by dotted lines in figure 5), the light emitted from the light source 21 is reflected by the removable mirror 22, and the reflected result light propagates in the free space in the apparatus 50. Then, by making the optical length from the light source 21 to the liquid crystal panel 51 approximately equal to the optical length from the light source 21 to the two-dimensional image forming part 5a when the movable mirror 22 is retired to the position not on the light path (disposed at the position represented by real lines in figure 5), the light intensity distribution becomes approximately uniform in plain on the plain of the liquid crystal panel 51, thereby making it possible to utilize the emitted light from the light source 21 as a back light of a liquid crystal panel 51, and enabling to accomplish an image display.

As described above, according to the fourth embodiment, in the two-dimensional image forming apparatus 50 which enlarges and projects a two-dimensional image on a screen provided outside, there are provided a liquid crystal panel 51 which can display an image, and a light path switching part for switching the light path for the emitted light from the light source, and switching is performed between the light path for guiding the light emitted from the light source 21 to the optical system for performing enlargement and projection, and the light path for guiding the emitted light from the light source 21 to the liquid crystal panel, and thereby the apparatus could be provided with an enlarging and displaying function that enlarges and displays a two-dimensional image on a screen outside the apparatus as well as an image display function that displays an image on the liquid crystal panel 51.

Further, since the movable mirror 22 is disposed between the light integrating optical system 2 and the dichroic mirror 3a so that the optical length from the light source 21 to the liquid crystal panel 51 when the movable mirror 22 is disposed on the light path and the optical length from the light source 21 to the two-dimensional image forming part 5a when the movable mirror 22 is retired to the position not on the light path are approximately equal to each other, the light that is emitted from the light source 21 can be utilized as a back light for the liquid crystal panel 51 without arising no loss of the light at all, and thereby realizing an image display on a liquid crystal panel that is extremely bright and quite easily viewable.

In addition, by, for example, making the reflection plain of the movable mirror 22 convex, it is possible to make the movable mirror have a function of serving as an enlarging optical system, and thereby it is possible to uniformly illuminate the liquid crystal panel 51 of a tremendously large size with relative to the two-dimensional image forming part 5a.

### (Embodiment 5)

While in the above-described respective embodiments the light sources of the two-dimensional image forming apparatus were halogen lamps which are general as a light source, the light source of the two-dimensional image forming apparatus is not limited thereto. The light emission diodes (LED) or lasers which respectively emit light of red(R), green(G), blue(B), respectively, may be employed therefor, with the same effects as described above obtained.

In this fifth embodiment, a case where lasers which emit lights of red (R), green (G), blue (B), respectively, are employed will be described.

Figure 6 is a diagram illustrating an example of a construction of a two-dimensional image forming apparatus 60 according to a fifth embodiment of the present invention.

In figure 6, numeral 60 denotes a two-dimensional image forming apparatus of this fifth embodiment. Numerals 61a, 61b, and 61c denote lasers which respectively emit light of red (R), green(G), and blue(B), respectively. Numerals 63a, 63b, and 63c denote dichroic mirrors which respectively have functions of reflecting only the light of wavelength region of red, green, and blue, respectively, numeral 2 denotes a light integrating optical system, numeral 5 denotes a two-dimensional image forming part comprising a two-dimensional spatial light modulating device, numeral 7 denotes an enlarging and projecting part which is constituted by pair lenses, numeral 22 denotes a movable mirror for switching the direction of the light that is emitted from the light sources 61a, 61b, and 61c, and numeral 31 denotes a dispersion plate that functions as a dispersion optical lens. Here, the dispersion plate 31 can be fabricated easily by, for example, producing concavo-convex at random on the surface of a glass plate.

In this embodiment, the light switching part which switches the light path of the emitted light from the light source is constituted by the movable mirror 22 and a moving mechanism (not shown) for moving the same, and the moving mechanism is the same as in the second embodiment. Accordingly, similarly as in the above-described embodiments, by moving the movable mirror 22 between at the position on the light path connecting the light sources 61a, 61b, 61c and the two-dimensional image forming part 5 (the position represented by the dotted lines in figure 6), and at the position not on the light path (the position represented by the real lines in figure 6), it is possible to switch the direction of the light emitted from the light source 21 of the apparatus 60.

Hereinafter, the function and effect of the two-dimensional image forming apparatus 60 of the above construction will be described.

In figure 6, when the movable mirror 22 is disposed at a position not on the path connecting the light sources 61a to 61c and the two-dimensional image forming part 5 (the position represented by real lines in figure 6), the lights emitted from the red laser 61a, green laser 61b, and blue laser 61c as light sources are respectively reflected by the dichroic mirrors 63a to 63c so that they have the same optical axes, and are incident to the light integrating optical system 2. The light that has transmitted through the light integrating optical system 2 becomes a light having a uniform in-plain intensity distribution on the two-dimensional image forming part 5, and irradiates the two-dimensional image forming part 5. Further, the light that has transmitted through the two-dimensional image forming part 5 has intensity distribution information, and is outputted by the enlarging and projecting part 7 to the outside of the apparatus 60 as the emission light LF, and is enlarged and projected onto a screen outside the apparatus (not shown). Then, by performing irradiation of the lights of respective colors onto the two-dimensional image forming part 5 in a time divisional manner by adjusting the emission timing and emission duration of red laser 61a, green laser 61b, and blue laser 61c, it is possible to carry out a full-color two-dimensional image formation by a single two-dimensional image forming part 5. For example, when a two-dimensional image is formed comprising 60 frames in a second, it is possible to carry out the above-described full-color image formation by repeating irradiation of respective colors for 1/180 second for each color.

Next, the illumination function which is possessed by the two-dimensional image forming apparatus 60 will be described.

In figure 6, when the movable mirror 22 is disposed on the light path connecting the light source 61a to 61c and the two-dimensional image forming part 5 by the moving mechanism (disposed at the position represented by doted lines in figure 6), the lights emitted from the light sources 61a to 61c are reflected by the removable mirror 22, and the reflected result light passes through the dispersion plate 31 to be irradiated to the outside as the emission light LG. The emitted lights LG become scattered lights of the lights emitted from the light sources 61a to 61c by passing through the dispersion plate 31, and the unfavorable influences on the eyesight that may arise in handling a high output light source can be reduced to a great extent, as a prominent advantage in view of safety. Further, the dispersion plate 31 can be designed or fabricated to have an arbitrary dispersion angle (to have an arbitrary degree of dispersion), and therefore, it is possible to adjust the state of illumination (for example, a broadening angle) according to its use.

According to the fifth embodiment, since in the two-dimensional image forming apparatus, a laser is employed as a light source, the parts number in such as the two-dimensional image forming part 5 can be reduced with relative to a case where a white light source such as the above-described halogen lamp is used, thereby accomplishing the miniaturization of the two-dimensional image forming apparatus and resulting in a great reduction in cost thereof.

Besides, in contrast to that the two-dimensional image forming part 5 is irradiated with the lights emitted from the laser light sources 61a to 61c of red, green, and blue, respectively, to perform a display of two-dimensional image as shown in figure 6, it may be constructed such that the lights emitted from the laser light sources 61a to 61c of red, green, and blue, respectively, are incident to the polygon mirror 71, the incident light are continuously reflected into a one-dimensional region having an appropriate broadening by the polygon mirror with its high speed rotation, and the light of a linear shape obtained by being reflected by the polygon mirror 71 is reflected and projected into a two-dimensional region by the galvano mirror 71, thereby forming a two-dimensional images.

More concretely, reference numeral 70 denotes a two-dimensional image forming apparatus using a polygon mirror 71 in figure 7. When the movable mirror 22 is disposed at a position not on the light path connecting the light sources 61a to 61c and the polygon mirror 71 (the position represented by the real lines in figure 7), the emitted lights from the red laser 61a, green laser 61b, and blue laser 61c as light sources are respectively reflected by the dichroic mirrors 63a to 63c so as to have the same optical axes, and are incident to the polygon mirror 71. The polygon mirror 71 has a polyhedral structure having mirrors at the respective plains, and when it is rotated at a high speed, it can scan the light that is incident to the mirror surface in a one-dimensional direction. Therefore, by performing intensity modulation at the laser light sources 61a to 61c, it is possible to obtain one-dimensional images. Further, since the galvano mirror 72 can electrically control the angle of the mirror surfaces, it is possible to one-dimensionally scan the incident light in a direction independent on the scanning direction of the polygon mirror 71. Accordingly, by disposing such that the scanning direction of the polygon mirror 71 and the scanning direction of the galvano mirror are in a relation vertical to each other, it is possible to easily form a two-dimensional image. The two-dimensional image thus obtained is emitted to the outside of the apparatus 70 as an emission light LF by the enlarging and projecting part 7, and is enlarged and projected on a screen outside the apparatus (not shown).

Further, as shown in figure 7, when the mirror 22 is disposed on a light path connecting the light sources 61a to 61c and the polygon mirror 71 (the position represented by dotted lines in figure 7), the emitted light from the light sources 61a to 61c are reflected by the movable mirror 22, and is outputted to the outside of the apparatus 70 as the emission light LG through the dispersion plate 31.

Besides, in the fifth embodiment, lasers are employed as light sources, LEDs of respective lights of red, green, and blue may be employed, with the same effects as described above.

Since as above-described lasers and LEDs, miniaturized and high output devices are developed, and particularly the lasers having high directivity of the emission light are developed, the sizes of respective constitutional parts of the two-dimensional image forming apparatus can be further reduced when the lasers are employed for light sources, and as a result, it is expected that the apparatus is utilized in various situation as a large screen projection apparatus that is quite compact and superior in its portability.

Further, because LEDs and lasers are higher in its light emission efficiency in response to the inputted power, it is possible to accomplish a low power consumption when realizing a two-dimensional image forming apparatus which can secure brightness that is equivalent to that of a lamp. Further particularly, since the laser light source has characteristics in a point of having a monochromaticity and a point that it can generate a light of wavelength band that cannot be obtained by the lamp output, it is possible to cover a fairly wide range of color region (for example, color region that is represented by a chromaticity diagram) that can be recognized by human eyes, by utilizing these characteristics. Accordingly, if laser light sources are employed as in this fifth embodiment, color reproducibility that is extremely high with relative to the two-dimensional image forming apparatus employing lamp light sources is obtained.

Further, even when the lights emitted from the light sources 61a to 61c are employed as illumination lights, if lasers are employed as light sources as shown in the fifth embodiment, various color tones can be arbitrarily selected. For example, it is possible to output all the fluorescent light colors which are now generally employed, such as daylight white color, daylight color, white, and lamp bulb color as white color light, as well as color illumination can be easily realized.

Further, in the fifth embodiment, since a dispersion plate 31 is disposed on a light path of the emission light LG serving as a dispersion optical system, it is possible to secure an advantage in view of safety that the light emitted from the light sources 61a to 61c are converted to the scattered lights and that the unfavorable influences on the eyesight are reduced to a great extent.

Here, while in this fifth embodiment the dispersion plate 31 is provided at the outer peripheral part of the apparatus 60, one that has integrated the movable mirror 22 and the dispersion plate 31 together as in the third embodiment shown in figure 5 may be employed, with the same effect described above.

In addition, as described in the fourth embodiment shown in figure 5, if an image displaying part such as a liquid crystal panel is disposed at the outer peripheral part of the two-dimensional image forming apparatus 60, that is, on the light path of the emission light LG, it is possible to carry out an image display using the emitted lights from the light sources 61a to 61c as back lights of the liquid crystal panel. The advantage due to such a construction resides in that the lights emitted from the light sources are used as back lights with arising almost no losses therein, thereby an image display that is quite bright and easily viewable can be obtained. Further, by making the configuration of the reflection plain of the movable mirror 22 to be convex, it is possible to make it have a function of serving as an enlarging optical system, thereby enabling a uniform illumination irradiated to an arbitrary sized liquid crystal panel.

Further, in each of the above-described second to fifth embodiments, the light path switching part is constituted by the movable mirror and the moving mechanism for moving the same, and the path of the light emitted from the light source is switched by the optical path switching part, so as to switch whether the light emitted from the light source is used for displaying a two-dimensional image or it is used as an illumination light or back lights of a liquid crystal panel. However, it is also possible, not to switch the light path of the emitted light from the light sources by the light path switching part, but to branch the light path so as to use one of the branched light paths for enlarging and projecting display of a two-dimensional image as well as to use the other for an illumination light or back lights of a liquid crystal panel.

### (Embodiment 6)

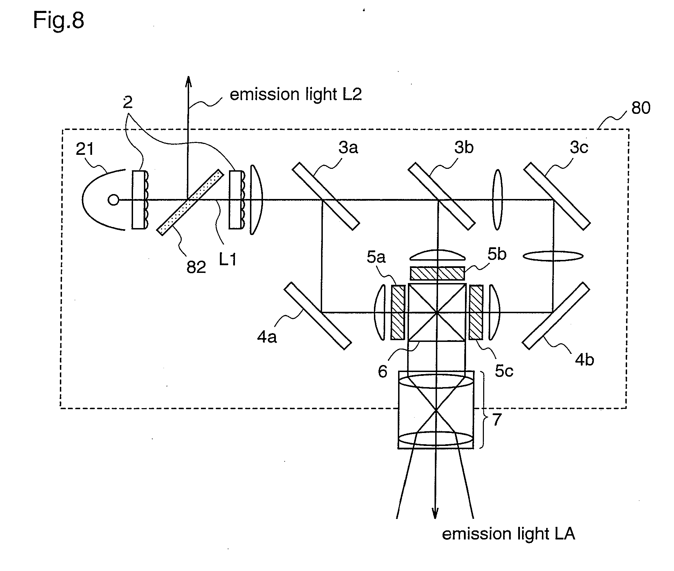

Figure 8 is a diagram illustrating a two-dimensional image forming apparatus according to a sixth embodiment of the present invention which has a construction as described above.

In figure 8, numeral 80 denotes a two-dimensional image forming apparatus of this sixth embodiment. Numeral 21 denotes a light source comprising a halogen lamp, numeral 2 denotes a light integrating optical system, numerals 3a, 3b, and 3c denote dichroic mirrors which respectively have functions of reflecting only the lights of wavelength regions of red, green, and blue, respectively, numerals 4a, 4b denote mirrors, numerals 5a, 5b, and 5c denote two-dimensional image forming parts each comprising a two-dimensional spatial light modulation device, numerals 6 denotes a dichroic prism which mixes the lights which are modulated by the two-dimensional image forming parts 5a to 5c, respectively. Numeral 7 denotes an enlarging and projection part which is constituted by pair lenses. Numeral 82 denotes a half mirror.

In this embodiment, the half mirror 82 is fixed onto the light path, and it constitutes a light path branching part which branches the light emitted from the light sources 21 of the apparatus 80, by branching the emitted light from the light source 21 into a light which has transmitted through the half mirror 82 and a light which was reflected by the half mirror 82.

Hereinafter, the function and effect of the two-dimensional image forming apparatus 80 of the above construction will be described.

First of all, the light emitted from the light source 21 is subjected to uniformization of the in-plain light intensity distribution by the light integrating optical system 2. Here, the distances between the light integrating optical system 2 and the respective two-dimensional image forming parts 5a to 5c are optimized so that the in-plain light intensity distribution of the respective lights are approximately uniform on the respective plains of the two-dimensional image forming parts 5a to 5c.

The light emitted from one of the lens arrays of the light integrating optical system 2 is branched into the emission light L1 and the emission light L2 by the half mirror 82. Then, the emission light L2 is emitted to the outside of the apparatus 80. This emission light L2 can be used, for example, as an at-hand light or an indirect illumination.

On the other hand, the other emission light L1 which was branched by the half mirror 82 has only its light of red region reflected by the dichroic mirror 3a that is disposed closest to the light source 21, and the light of other wavelength region transmits through it. Then, the light of red region which was reflected by the dichroic mirror 3a is irradiated to the two-dimensional image forming part 5a via the mirror 4a. The light that has transmitted through the dichroic mirror 3a has only its light of green region reflected by the dichroic mirror 3b, and the light of other wavelength region transmits through it. Then, the light of green region that was reflected by the dichroic mirror 3b is irradiated to the two-dimensional image forming part 5b. Further, the light that has transmitted through the dichroic mirror 3b has only its light of blue region reflected by the dichroic mirror 3c, and the reflected light of blue region is irradiated to the two-dimensional image forming part 5c through the mirror 4b. Thereafter, the lights which have transmitted the respective two-dimensional image forming parts 5a to 5c are mixed by the dichroic prism 6, and is outputted to the outside of the apparatus 80 as an emission light source La by the enlarging and projecting part 7 which projects the two-dimensional image which were produced in the two-dimensional image forming parts 5a to 5c in an one-to-one relation as an emission light La, and is enlarged and projected onto a screen outside the apparatus (not shown).

As described above, according to the sixth embodiment, in the two-dimensional image forming apparatus 80 which enlarges and projects a two-dimensional image on a screen outside, a light path branching part which branches the light path into two paths is provided, and therefore, it is possible to utilize the emitted light from the light source 21 for an enlarging and projecting display as well as for an illumination light.

Further, if the transmittance of the half mirror 82 is set at an arbitrary value from the outside of the apparatus, it is possible to easily take out a light amount that is required by the user as an illumination light, as well as for projection display of a two-dimensional image.

Further, while according to the sixth embodiment, the half mirror 82 is disposed between the two sets of lens arrays constituting the light integrating optical system 2, the setting position of the half mirror is not limited thereto. For example, the half mirror as a light path branching part may be disposed between the two-dimensional image forming part and the enlarging and projecting part. However, if the half mirror 82 is disposed between the two sets of arrays as in this sixth embodiment, the two-dimensional image forming apparatus 80 can be made more compact.

Besides, in this sixth embodiment, an example in which the light source comprises a halogen lamp, the light source may be a laser or an LED, and the same effects as described above are obtained.

Further, if the two-dimensional image forming apparatus 80 is constituted as one which has a liquid crystal panel serving as a screen display part disposed at its outer side surface, it is possible to utilize the emission light L2 from the light source as back lights of the liquid crystal panel.

### (Embodiment 7)

In the above-described second to fourth embodiments, the light path switching part is disposed between the light source and the two-dimensional image forming part, and the light emitted from the light source is made available for the use other than displaying two-dimensional images. However, in this seventh embodiment, a two-dimensional image forming part which is provided with a light path switching part for switching the light path of the light emitted from the light source between the light path that includes the enlarging and projecting part and the light path that does not include the enlarging and projecting part will be described.

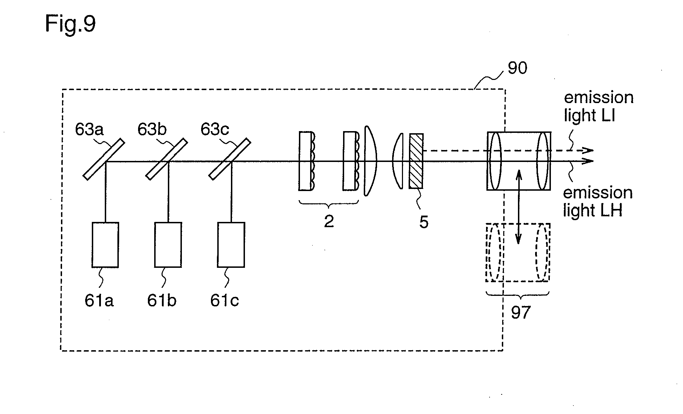

Figure 9 is a diagram illustrating a construction of a two-dimensional image forming apparatus according to the seventh embodiment of the present invention.

In figure 9, numeral 90 denotes a two-dimensional image forming apparatus of this seventh embodiment. Numerals 61a, 61b, and 61c denote lasers which respectively emit lights of red(R), green(G), and blue(B), respectively. Numerals 63a, 63b, and 63c denote dichroic mirrors which respectively have functions of reflecting only the light of wavelength region of red, green, and blue, respectively, numeral 2 denotes a light integrating optical system, numeral 5 denotes a two-dimensional image forming part comprising a two-dimensional spatial light modulating device, and numeral 97 denotes an enlarging and projecting part which is constituted by pair lenses, and is movable. Here, the enlarging and projecting part 97 is moved between the position on the light path of the light emitted from the light source and the position not on the light path of the light emitted from the light source, with driven by the moving mechanism not shown. Here, the moving mechanism has the same mechanism as the moving mechanism 23 shown in the second embodiment.

More concretely, the above-described enlarging and projecting part 97 is fixed on such as a setting plate, and it can be moved by moving the setting plate from the position shown by real lines in figure 9 to the position shown by the dotted lines, or from the position shown by dotted lines to the position shown by real lines, by a dynamical method that is exerted from the outside of the apparatus 90, such as the user operating a lever that is provided at the side surface of the apparatus 90. Besides, the above-described moving mechanism is not limited to that described above. For example, it may be realized by installing such as a motor inside the setting plate 23a, and making the setting plate move by an electric input.

Hereinafter, the function and effect of the two-dimensional image forming apparatus 90 of the above construction will be described.

First of all, the function of enlarging and displaying a two-dimensional image, which is possessed by the two-dimensional image forming apparatus 90 is described.

In figure 9, when the enlarging and displaying part 97 is disposed on the light path of the emitted light (the position represented by real lines in figure 9), the lights emitted from the red laser 61a, green laser 61b, and blue laser 61c as light sources are respectively reflected by the dichroic mirrors 63a to 63c so that they have the same optical axes, and are incident to the light integrating optical system 2. The light that has transmitted through the light integrating optical system 2 becomes a light having a uniform in-plain intensity distribution on the two-dimensional image forming part 5, and irradiates the two-dimensional image forming part 5. Further, the light that has transmitted through the two-dimensional image forming part 5 has intensity distribution information, and is outputted to the outside of the apparatus 90 as the emission light LH by the enlarging and projecting part 7, and is enlarged and projected onto a screen outside the apparatus(not shown).

Next, the illumination function which is possessed by the two-dimensional image forming apparatus 90 will be described.

As shown in figure 9, when the enlarging and projecting part 97 is retired to the position not on the light path of the emission light from the two-dimensional image forming part 5 (shown by the dotted lines in figure 9) by the moving mechanism, the emitted light from the light source is irradiated to the outside of the apparatus 90 as an emission light L1 which does not pass through the enlarging and projecting part 97.

This emitted light L1 is a two-dimensional image before being enlarged by the enlarging and projecting part 97, and it is, for example, possible to use this two-dimensional image for a use for a presentment illumination. While, for example, a fine particle pattern or a polka-dot pattern is generally employed as a general presentment illumination, conventionally a presentment illumination is realized by a method employing an aperture which shuts out a light from a light source or performing projection with combining plural light sources of large or small sizes. Accordingly, conventionally it is required to provide a large power light source system or a system which controls plural light sources, and therefore, the presentment illumination apparatus amounts to a large size as well as to a high cost.

In this seventh embodiment, since there is provided a light path switching part which switches the light path of the emitted light from the light source between a light path which includes the enlarging and projecting part and a light path which does not include the enlarging and projecting part, it is possible to make the light emitted from the light source outputted to the outside of the apparatus without passing through the enlarging and projecting part 97. Therefore, it is possible to realize an illumination that can display various patterns arbitrarily without losing the light amount that is outputted from the two-dimensional image forming part 5, and it is possible to realize a presentment illumination apparatus of small size as well as of low cost.

Here, it can be also thought of that the light that has transmitted through the enlarging and projecting part 97 is enlarged to be employed as an illumination light for obtaining a presentment effect. However, when the emitted light from the two-dimensional image forming part 5 transmits the enlarging and projecting part 97, the two-dimensional image that is obtained by the two-dimensional image forming part 5 is enlarged and projected onto a projection plain in a one-to-one relation, and therefore, when a rectangular one is employed for the two-dimensional image forming part 5, the enlarged and projected plain also becomes rectangular. However, as the presentment illumination, an illumination of a rectangular output is not generally used.

Accordingly, it is quite effective that the enlarging and projecting part 97 is retired from on the light path by the moving mechanism, and that the emitted light which is emitted from the two-dimensional image forming part 5 and whose rectangular output frame is barely troublesome can be utilized as a presentment illumination light.

Further, it is also possible to, for example, change the configuration of the emission window for outputting the emitted light from the light source to the outside of the apparatus to various shapes, or to apply a processing to the output light by mounting a dispersion plate or a lens to the light emission window, and thereby, it is also possible to widen the range of use of the two-dimensional image forming apparatus over not only institutional use but also household use.

### INDUSTRIAL AVAILABILITY

The present invention provides a two-dimensional image forming apparatus which can utilize the emitted light from the light sources for use other than forming a two-dimensional image, and therefore, the image display apparatus such as a television receiver or a video projector can be utilized also as an illumination apparatus. Thus, the light source light can be utilized for multi-purposes and very helpful.

## Claims

1. A two-dimensional image forming apparatus comprising:
a light source;
a two-dimensional image forming part for forming a two-dimensional image by the light emitted from the light source;
an enlarging and projection part for enlarging and projecting the two-dimensional image formed by the two-dimensional image forming part;
a light path switching part for switching and selecting a path for the light emitted from the light source, among a first path including both the two-dimensional image forming part and the enlarging and projection part and a second light path which does not include at least one of the two-dimensional image forming part and the enlarging and projection part.

2. The two-dimensional image forming apparatus as defined in Claim 1 wherein
the second light path does not include the two-dimensional image forming part.

3. The two-dimensional image forming apparatus as defined in Claim 1 wherein
the second light path does not include the enlarging and projection part.

4. The two-dimensional image forming apparatus as defined in Claim 2 wherein
the light path switching part is a rotation mechanism which makes rotate the light source so that the direction of the light emitted from the light source is changed.

5. The two-dimensional image forming apparatus as defined in Claim 3 wherein
the light switching part is a moving mechanism for moving the enlarging and projection part between a position which is located on a light path of the emitted light from the light source and a position which is not located on that light path.

6. The two-dimensional image forming apparatus as defined in Claim 1 wherein
the light path switching part includes:
a mirror; and
a moving mechanism for moving the mirror between a position at which the mirror reflects the light emitted from the light source, which position is on a light path of the emitted light from the light source, and a position which is not located on the light path of the light emitted from the light source.

7. The two-dimensional image forming apparatus as defined in Claim 1, wherein
the second light path includes an enlarging optical system or a dispersion optical system, and
the emitted light is irradiated toward the outside of the apparatus via the enlarging optical system or the dispersion optical system when the light path of the emitted light from the light source is switched so that the emitted light propagates on the second light path.

8. The two-dimensional image forming apparatus as defined in Claim 1, wherein
the second light path includes the liquid crystal panel, and the emitted light is employed as a back light of the liquid crystal panel when the light path of the emitted light from the light source is switched so that the emitted light propagates on the second light path.

9. A two-dimensional image forming apparatus comprising:
a light source;
a two-dimensional image forming part for forming a two-dimensional image by the light emitted from the light source;
an enlarging and projection part for enlarging and projecting the two-dimensional image formed by the two-dimensional image forming part;
a light path branching part for branching a path for the light emitted from the light source so that a part of the emitted light propagates on a first light path which includes both the two-dimensional image forming part and the enlarging and projection part, and the other part of the emitted light propagates on a second light path which does not include at least one of the two-dimensional image forming part and the enlarging and projection part.

10. The two-dimensional image forming apparatus as defined in Claim 9, wherein
the light branching part is disposed between the light source and the two-dimensional image forming part.

11. The two-dimensional image forming apparatus as defined in Claim 9, wherein
the light path branching part is disposed between the two-dimensional image forming part and the enlarging and projection part.

12. The two-dimensional image forming apparatus as defined in Claim 10 or 11, wherein
the light path branching part is a half mirror.

13. The two-dimensional image forming apparatus as defined in Claim 1 or Claim 9, wherein
the light source is an LED.

14. The two-dimensional image forming apparatus as defined in Claim 1 or 9, wherein
the light source is a laser.
